# EUROPÄISCHE PATENTSCHRIFT

(11) **EP 3 963 235 B1**
(45) Veröffentlichungstag und Bekanntmachung des Hinweises auf die Patenterteilung: **20.12.2023**
(21) Anmeldenummer: 20707088.9
(22) Anmeldetag: 25.02.2020
(51) Int. Cl.: F04D 29/12, F16J 15/34

(54) **GLEITRINGDICHTUNGSANORDNUNG, INSBESONDERE FÜR HEISSE MEDIEN, SOWIE PUMPENANORDNUNG**
MECHANICAL FACE SEAL ASSEMBLY, IN PARTICULAR FOR HOT MEDIA, AND PUMP ASSEMBLY
ENSEMBLE DE GARNITURE MÉCANIQUE, EN PARTICULIER POUR DES FLUIDES CHAUDS, AINSI QU'ENSEMBLE DE POMPE

(30) Priorität: 30.04.2019 DE 102019206205
(43) Veröffentlichungstag der Anmeldung: 09.03.2022
(73) Patentinhaber: EagleBurgmann Germany GmbH & Co. KG, 82515 Wolfratshausen (DE)
(72) Erfinder: OBERTANNER, Kilian, 82049 Pullach (DE); BAUER, Johannes, 83646 Wackersberg (DE); GERG, Josef, 82544 Egling (DE); LEDIG, Stefan, 82343 Pöcking (DE); KIERMEIR, Joseph, 82327 Tutzing (DE); RAPP, Christoph, 82054 Sauerlach (DE)
(74) Vertreter: Hoefer & Partner Patentanwälte mbB
(86) Internationale Anmeldenummer: PCT/EP2020/054864
(87) Internationale Veröffentlichungsnummer: WO 2020/221489

(56) Entgegenhaltungen:
- EP-A1- 1 967 774
- WO-A1-2019/044504
- DE-A1-102014 203 336
- DE-T1- 19 983 245

## Beschreibung

Die Erfindung betrifft eine Gleitringdichtungsanordnung, insbesondere für heiße Medien sowie eine Pumpenanordnung mit einer derartigen Gleitringdichtungsanordnung. Gleitringdichtungsanordnungen sind aus dem Stand der Technik in unterschiedlichen Ausgestaltungen bekannt. Im Betrieb kann sich im Bereich der Gleitringe der Gleitringdichtung eine Wärmeentwicklung ergeben, welche im Extremfall zu Schäden bzw. kurzen Lebensdauern der Gleitringe führen kann. Um die Temperatur an den Gleitringen zu senken wird daher gekühltes Sperrmedium verwendet, welches zu den Gleitringen und insbesondere in den Dichtspalt zugeführt wird. Dadurch kann die Temperatur an den Gleitringen gesenkt werden. Nachteilig ist hierbei jedoch, dass dies einen erheblichen konstruktiven Aufbau mit einer zusätzlichen Anlage für das Sperrfluid benötigt. Die Problematik der Wärmeentwicklung wird beispielsweise noch gesteigert, wenn die Gleitringdichtungsanordnung bei heißen Medien, beispielsweise bei Kraftwerksanwendungen, eingesetzt wird. Aus der DE 199 83 245 T1 ist eine Pumpe mit einem Spülring bekannt, bei dem ein Spülfluid in einen wulstartigen Hohlbereich geführt wird und aus diesem über mehrere Austrittsöffnungen zu einer Dichtung geführt wird. Eine ähnliche Gleitringdichtung, die eine Gleitringdichtung nach dem Oberbegriff des Anspruchs 1 offenbart, ist auch aus WO2019044504 bekannt.

Es ist daher Aufgabe der vorliegenden Erfindung, eine Gleitringdichtungsanordnung, insbesondere zur Abdichtung von heißen Medien, bereitzustellen, welche bei einfachem Aufbau und kostengünstiger Herstellbarkeit temperaturbedingte Schädigungen der Gleitringdichtung vermeiden kann. Ferner ist es Aufgabe der vorliegenden Erfindung, eine Pumpenanordnung bereitzustellen, welche insbesondere zur Förderung von heißen Medien geeignet ist und eine Abdichtung der Pumpe der Pumpenanordnung mittels einer erfindungsgemäßen Gleitringdichtungsanordnung ermöglicht.

Diese Aufgabe wird durch eine Gleitringdichtungsanordnung mit den Merkmalen des Anspruchs 1 bzw. eine Pumpenanordnung mit den Merkmalen des Anspruchs 11 gelöst. Die Unteransprüche zeigen jeweils bevorzugte Weiterbildungen der Erfindung.

Die erfindungsgemäße Gleitringdichtungsanordnung mit den Merkmalen des Anspruchs 1 weist dabei den Vorteil auf, dass eine deutlich verbesserte Kühlung der Gleitringdichtung möglich ist. Weiterhin kann der Aufbau und die Herstellung der Gleitringdichtungsanordnung signifikant vereinfacht werden, da kein separater Sperrkreislauf notwendig ist. Insbesondere kann eine zusätzliche Umwälzpumpe im Sperrkreislauf mit einem zusätzlichen Kühlmedium vermieden werden, was neben der Einsparung der Umwälzpumpe auch im Betrieb der Gleitringdichtungsanordnung eine Reduzierung der notwendigen Energie ermöglicht. Dies wird erfindungsgemäß dadurch erreicht, das die Gleitringdichtungsanordnung eine Gleitringdichtung mit einem rotierenden und einem stationären Gleitring umfasst, welche zwischen ihren Gleitflächen einen Dichtspalt definieren. Ferner ist eine Umwälz-Fördereinrichtung vorgesehen, welche benachbart zum rotierenden Gleitring angeordnet ist. Die Umwälz-Fördereinrichtung fördert Fluid in eine Umwälzleitung, in welcher eine Kühleinrichtung zur Abkühlung des umgewälzten Fluids angeordnet ist. Die Umwälzleitung führt dabei von der Umwälz-Fördereinrichtung zu einem Raum, welcher am Dichtspalt der Gleitringdichtung angeordnet ist. Dadurch kann kühles Medium zu den Gleitringen geführt werden. Die Umwälz-Fördereinrichtung umfasst einen rotierenden Umwälzrotor und ein hohlzylindrisches Gehäuse. Der Umwälzrotor ist mit einem rotierenden Bauteil, beispielsweise einer Welle oder einer auf die Welle aufgesetzten Hülse verbunden. Das Gehäuse der Umwälz-Fördereinrichtung umfasst eine innere und eine äußere Mantelfläche, wobei an der äußeren Mantelfläche ein Förderkanal vorgesehen ist. Der Förderkanal weist einen Startbereich und einen Endbereich auf und ist in Umfangsrichtung entlang der äußeren Mantelfläche ausgebildet. Dabei sind der Startbereich und der Endbereich durch einen Trennsteg voneinander getrennt. Hierdurch ist der Förderkanal nicht umlaufend geschlossen, sondern weist den Startbereich und den Endbereich auf, welche in einer Umfangsrichtung nicht miteinander in Verbindung stehen, da der Trennsteg für eine Trennung sorgt. Ferner ist eine Vielzahl von Zufuhröffnungen vorgesehen, welche von der inneren Mantelfläche des Gehäuses im Förderkanal münden. Weiterhin ist eine einzige Austrittsöffnung am Endbereich des Förderkanals vorgesehen.

Somit wird das Fluid durch die Umwälz-Fördereinrichtung von der Innenseite des Gehäuses durch die Zufuhröffnungen in den Förderkanal gefördert und aus dem Förderkanal über die Austrittsöffnung in die Umwälzleitung zur Kühleinrichtung geleitet. Nachdem das Fluid in der Kühleinrichtung abgekühlt wurde, wird das abgekühlte Fluid zu dem Raum am Dichtspalt der Gleitringdichtung geführt und kühlt dort die Gleitringe entsprechend ab. Dadurch reduziert sich ein Verschleiß der Gleitringe und eine Lebensdauer der Gleitringe und der gesamten Gleitringdichtung wird signifikant verlängert, wodurch Austauschintervalle vergrößert werden können. Die Gleitringdichtungsanordnung gemäß der Erfindung ist besonders geeignet zur Abdichtung von heißen Medien, beispielsweise bei Kraftwerksanwendungen oder industriellen Anwendungen mit heißen Medien.

Vorzugsweise ist die Austrittsöffnung am Gehäuse der Umwälz-Fördereinrichtung in Axialrichtung der Gleitringdichtungsanordnung gerichtet. Hierdurch ergibt sich ein besonders einfacher Aufbau der Gleitringdichtungsanordnung, welcher insbesondere in eine Radialrichtung kleinbauend ausgelegt werden kann. Dadurch ist eine einfache Montage der Gleitringdichtungsanordnung in einem Gehäuse einer Pumpe, beispielsweise eines Kraftwerks od. dgl. möglich.

Gemäß einer weiteren bevorzugten Ausgestaltung der vorliegenden Erfindung vergrößert sich eine Breite des Förderkanals im Gehäuse der Umwälz-Fördereinrichtung ausgehend vom Startbereich bis zum Endbereich. Besonders bevorzugt vergrößert sich die Breite des Förderkanals dabei kontinuierlich. Alternativ vergrößert sich die Breite des Förderkanals vom Startbereich bis zum Endbereich stufenförmig, vorzugsweise in gleichgroßen Stufen. Da entlang des Umfangs eine Vielzahl von Zufuhröffnungen im Gehäuse vorgesehen sind, bleibt im Betrieb ein Druckniveau des Fluids im Bereich des Förderkanals weitgehend konstant, da sich durch die Erweiterung des Förderkanals der Druck eigentlich vergrößert, jedoch durch die stete Zufuhr an einer Vielzahl von Positionen über die Zuführeinrichtungen dieses Druckniveau wieder reduziert wird.

Um eine besonders gute Förderleistung zu erreichen, sind die Vielzahl von Zufuhröffnungen zum Förderkanal zu einer Radialrichtung der Gleitringdichtungsanordnung in einem spitzen Winkel α geneigt.

Besonders bevorzugt umfasst der Umwälzrotor der Umwälz-Fördereinrichtung eine Vielzahl von Schaufeln. Die Schaufeln sind vorzugsweise bogenförmige Hohlzylinderabschnitte, wodurch die Herstellung besonders einfach und kostengünstig ausführbar ist. Weiter bevorzugt sind die Schaufeln teilweise radial innerhalb der Zufuhröffnungen im Gehäuse der Umwälz-Fördereinrichtung angeordnet.

Um im Betrieb mögliche auftretende Schwingungen zu vermeiden, ist eine Anzahl der Schaufeln des Umwälzrotors kein Vielfaches der Anzahl der Zufuhröffnungen. D.h., die Anzahl der Schaufeln und die Anzahl der Zufuhröffnungen sind nicht gleich bzw. nicht doppelt so groß, bzw. nicht dreimal so groß, usw. Beispielsweise sind fünf Zufuhröffnungen vorgesehen und neun Schaufeln. Somit reduzieren sich signifikant Schwingungen im Betrieb, so dass die Lebensdauer der Gleitringdichtung weiter vergrößert werden kann. Um eine besonders gute Förderleistung der Umwälz-Fördereinrichtung zu erreichen, sind vorzugsweise alle Mittelpunkte der Zufuhröffnungen im Gehäuse in einer ersten Ebene angeordnet, welche senkrecht zur Mittelachse der Gleitringdichtung liegt.

Weiter bevorzugt ist der Förderkanal im Gehäuse der Umwälz-Fördereinrichtung derart ausgebildet, dass der Förderkanal eine erste Wand aufweist, welche in einer zweiten Ebene senkrecht zur Mittelachse X-X der Gleitringdichtung liegt.

Vorzugsweise liegt der Beginn der Austrittsöffnung in einer dritten Ebene, welche senkrecht zur Axialrichtung ist. Dabei ist ein erster Abstand zwischen der zweiten und dritten Ebene mindestens doppelt so groß wie ein zweiter Abstand zwischen der zweiten und ersten Ebene. Somit wird erreicht, dass zwischen der ersten Ebene, in welcher die Zufuhröffnungen liegen und der Ebene, an welcher die Austrittsöffnung beginnt, ein größerer Abstand vorhanden ist. Dadurch kann die Förderleistung der Umwälz-Fördereinrichtung weiter verbessert werden.

Ferner betrifft die vorliegende Erfindung eine Pumpenanordnung umfassend eine Pumpe mit einem Pumpenrotor und einer erfindungsgemäßen Gleitringdichtungsanordnung.

Die Pumpenanordnung ist vorzugsweise derart ausgebildet, dass die Gleitringdichtungsanordnung radial innerhalb eines Gehäuseteils der Pumpe angeordnet ist. Hierdurch ergibt sich eine insbesondere in Axialrichtung kurze Bauweise, da die Gleitringdichtungsanordnung insbesondere direkt benachbart zum Pumpenrotor der Pumpe positionierbar ist. Da die Umwälz-Fördereinrichtung unmittelbar an der Gleitringdichtung angeordnet ist und insbesondere in Radialrichtung der Gleitringdichtung einen besonders flachen Aufbau aufweist, ist auch eine einfache Nachrüstung der erfindungsgemäßen Gleitringdichtungsanordnung bei bestehenden Pumpen möglich, da ein problemloser Einbau in ein Gehäuse der schon eingebauten Pumpen möglich ist.

Die Pumpenanordnung ist vorzugsweise zur Förderung von heißen Medien, beispielsweise heißem Speisewasser von Kraftwerksanwendungen od. dgl. eingerichtet.

Nachfolgend wird ein bevorzugtes Ausführungsbeispiel der Erfindung unter Bezugnahme auf die begleitende Zeichnung im Detail beschrieben. In der Zeichnung ist:
- Fig. 1: eine schematische Ansicht einer Pumpenanordnung mit einer Gleitringdichtungsanordnung gemäß einem ersten bevorzugten Ausführungsbeispiel der Erfindung,
- Fig. 2: eine schematische Schnittansicht der Gleitringdichtungsanordnung von Fig. 1,
- Fig. 3: eine schematische, perspektivische Darstellung eines Gehäuses einer Umwälz-Fördereinrichtung von Fig. 2,
- Fig. 4 und 5: schematische Seitenansichten des Gehäuses von Fig. 3,
- Fig. 6: eine schematische Schnittansicht der Umwälz-Fördereinrichtung von Fig. 2, und

- Fig. 7: eine schematische Ansicht eines Gehäuses einer Pumpenanordnung mit einer Gleitringdichtungsanordnung gemäß einem zweiten bevorzugten Ausführungsbeispiel der Erfindung.

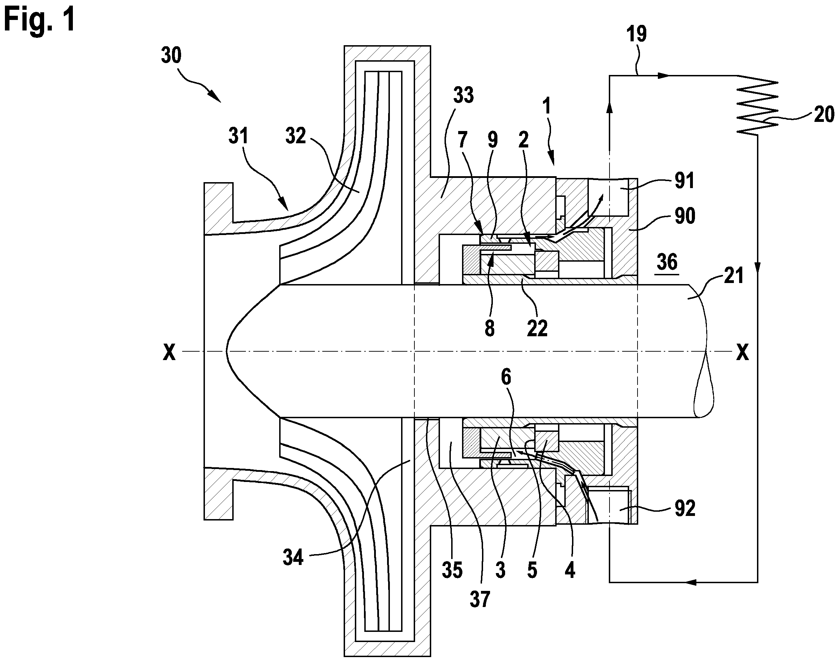

Nachfolgend wird unter Bezugnahme auf die Fig. 1 bis 6 eine Pumpenanordnung 30 mit einer Gleitringdichtungsanordnung 1 gemäß einem ersten bevorzugten Ausführungsbeispiel der Erfindung im Detail beschrieben.

Wie aus Fig. 1 ersichtlich ist, umfasst die Pumpenanordnung 30 eine Pumpe 31 sowie eine Gleitringdichtungsanordnung 1, welche einen Fluidraum 34 der Pumpe 31 gegenüber einer Atmosphäre 36 an einer Antriebswelle 21 abdichtet.

Die Pumpe 31 umfasst einen Pumpenrotor 32, welcher in einem Pumpengehäuse 33 angeordnet ist. Über einen Spalt 35 zwischen der Antriebswelle 21 und dem Pumpengehäuse 33 ist der Fluidraum 34 mit einem Aufnahmeraum 37 verbunden, in welchem die Gleitringdichtungsanordnung 1 angeordnet ist.

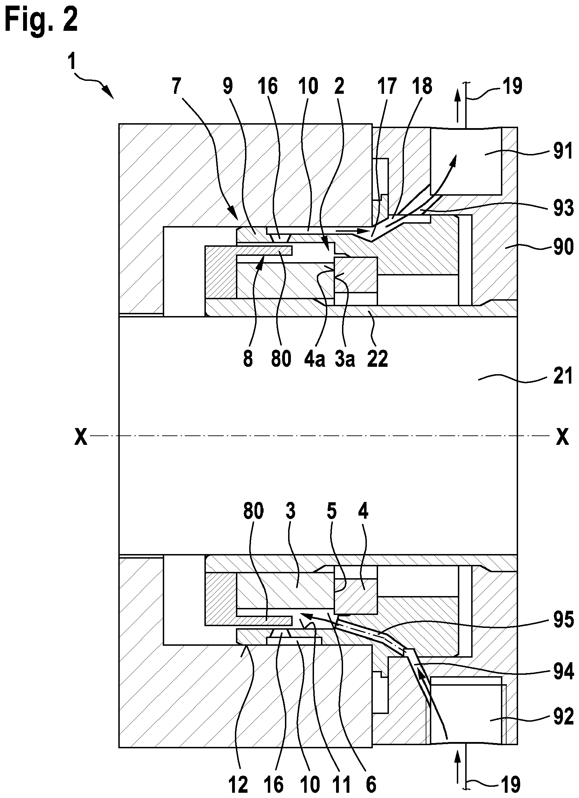

Die Gleitringdichtungsanordnung 1 ist im Detail aus der Fig. 2 ersichtlich. Die Gleitringdichtungsanordnung 1 umfasst hierbei eine Gleitringdichtung 2 sowie eine Umwälz-Fördereinrichtung 7.

Die Gleitringdichtung 2 umfasst einen rotierenden Gleitring 3 und einen stationären Gleitring 4, welche zwischen ihren Dichtflächen 3a, 4a einen Dichtspalt 5 definieren. Der rotierende Gleitring 3 ist auf einer Hülse 22 fixiert, welche auf der Antriebswelle 21, beispielsweise mit einer Presspassung, aufgepresst ist.

Die Umwälz-Fördereinrichtung 7 umfasst einen Umwälzrotor 8, welcher an der Hülse 22 fixiert ist, sowie ein hohlzylindrisches Gehäuse 9. Der Umwälzrotor 8 ist dabei innerhalb des hohlzylindrischen Gehäuses 9 angeordnet. Die Umwälz-Fördereinrichtung 7 umfasst ferner eine Umwälzleitung 19, in welcher eine Kühleinrichtung 20 zur Abkühlung des umgewälzten Fluids angeordnet ist (vgl. Fig. 1).

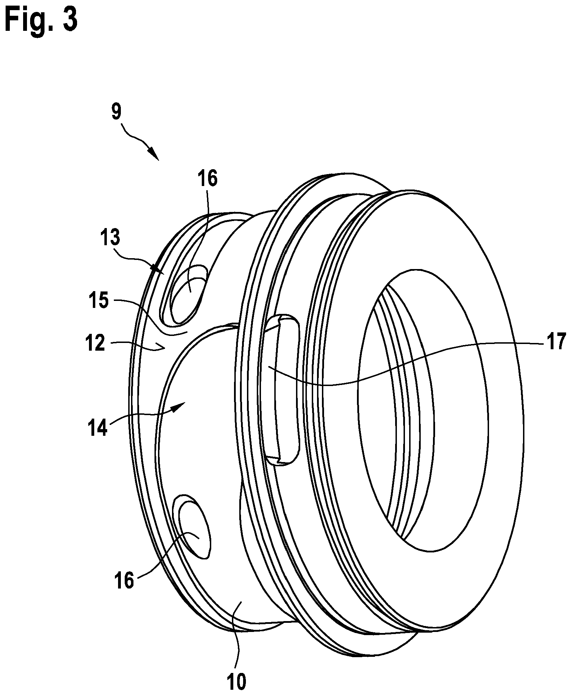

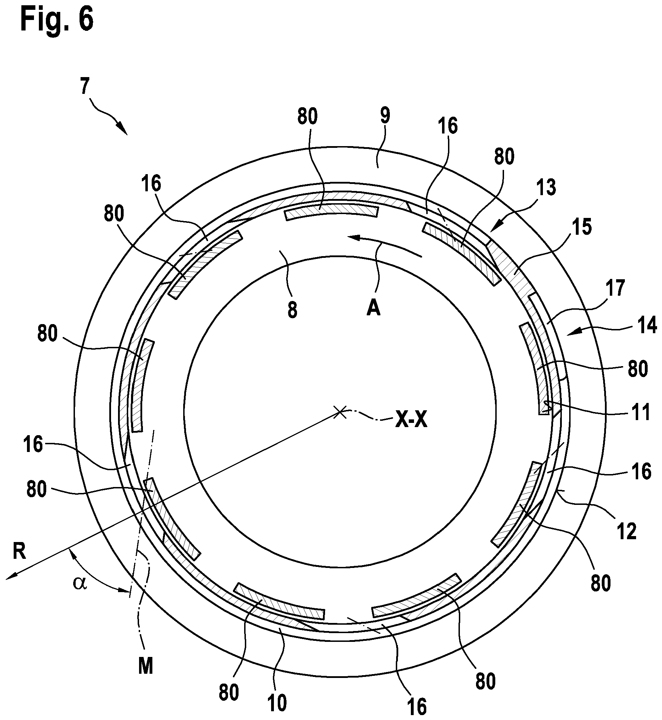

Der Umwälzrotor 8 und das hohlzylindrische Gehäuse 9 der Umwälz-Fördereinrichtung 7 sind im Detail aus den Fig. 3 bis 6 ersichtlich. Der Umwälzrotor 8 ist innerhalb des Gehäuses 9 angeordnet und umfasst eine Vielzahl von Schaufeln 80. in diesem Ausführungsbeispiel, wie in Fig. 6 gezeigt, umfasst der Umwälzrotor 8 genau neun Schaufeln.

Das hohlzylindrische Gehäuse 9 weist eine innere Mantelfläche 11 und eine äußere Mantelfläche 12 auf. Wie aus Fig. 2 ersichtlich ist, ist der Umwälzrotor 8 dabei mit einem kleinen Abstand zu der inneren Mantelfläche 11 angeordnet. In der äußeren Mantelfläche 12 ist ein Förderkanal 10 ausgebildet. Der Förderkanal 10 weist hierbei nur eine geringe Tiefe von wenigen Millimetern auf.

Wie aus den Fig. 3 bis 5 ersichtlich ist, weist der Förderkanal 10 einen Startbereich 13 und einen Endbereich 14 auf. Hierbei sind der Startbereich 13 und der Endbereich 14 durch einen Trennsteg 15 voneinander getrennt. Dadurch ist der Förderkanal 10 nicht vollständig umlaufend am äußeren Umfang des Gehäuses 9 vorgesehen, sondern verbindet den Startbereich 13 mit dem Endbereich 14 nur in eine Umfangsrichtung. Dadurch können Förderverluste vermieden werden, welche entstehen, wenn ein vollständig umlaufender Kanal vorgesehen wäre.

Damit Fluid vom Umwälzrotor 8 überhaupt in den Förderkanal 10 gefördert werden kann, sind im hohlzylindrischen Gehäuse 9 eine Vielzahl von Zufuhröffnungen 16 vorgesehen. In diesem Ausführungsbeispiel sind genau fünf Zuführöffnungen 16 vorgesehen. Die Zuführöffnungen 16 sind Durchgangsöffnungen, welche die innere Mantelfläche 11 des Gehäuses 9 mit dem Förderkanal 10 verbinden. Somit wird Fluid von einer radialen Innenseite des Gehäuses 9 in den Förderkanal 10 an der radialen Außenseite des Gehäuses in den Förderkanal 10 gefördert.

Wie insbesondere aus Fig. 2 und 3 ersichtlich ist, ist am Endbereich 14 des Förderkanals 10 eine einzige Austrittsöffnung 17 vorgesehen. Die Austrittsöffnung 17 ist dabei in Axialrichtung gerichtet (vgl. Fig. 6). An die Austrittsöffnung 17 schließt sich ein Austrittskanal 18 an, welcher zu einem ersten Anschluss 91 führt, an welchem die Umwälzleitung 19 beginnt. Der erste Anschluss 91 ist dabei über eine erste Verbindungsöffnung 93 mit dem Austrittskanal 18 verbunden. Der erste Anschluss 91 ist dabei in einem zweiten Gehäuseteil 90 angeordnet.

Die Umwälzleitung 19 führt dabei das Fluid dann zur Kühleinrichtung 20 und von dort gelangt das Fluid zu einem zweiten Anschluss 92, welcher ebenfalls im zweiten Gehäuseteil 90 vorgesehen ist. Wie aus Fig. 2 ersichtlich ist, können der erste Anschluss 91 und der zweite Anschluss 92 einander um 180° gegenüberliegen. Vom zweiten Anschluss 92 wird das Fluid über eine zweite Verbindungsöffnung 94 und einen weiteren Verbindungskanal 95 in einen Raum 6 an der Gleitringdichtung geführt. Dadurch kann kühles Fluid in den Bereich des Dichtspalts 5 und der beiden Gleitringe 3, 4 zugeführt werden, so dass die Temperatur an der Gleitringdichtung 2 nicht zu hoch werden kann.

Somit wird erfindungsgemäß Fluid, welches durch die Pumpe 31 gefördert wird, auch zur Kühlung der Gleitringdichtung 2 verwendet. Das Fluid wird hierbei über den Spalt 35 zur Umwälz-Fördereinrichtung 7 zugeführt und von dort über die Zufuhröffnungen 16 und den Förderkanal 10 zur einzigen Austrittsöffnung 17 geführt. Von dort wird das Fluid über die Umwälzleitung 19 zur Kühleinrichtung 20 geführt und dort gekühlt und dann über den zweiten Anschluss 92 und die zweite Verbindungsöffnung 94 und den weiteren Verbindungskanal 95 wieder zurück in den Raum 6 an der Gleitringdichtung 2 geführt. Dadurch ist es möglich, dass eine Temperatur an der Gleitringdichtung 2 und deren Bauteile relativ niedrig gehalten werden kann.

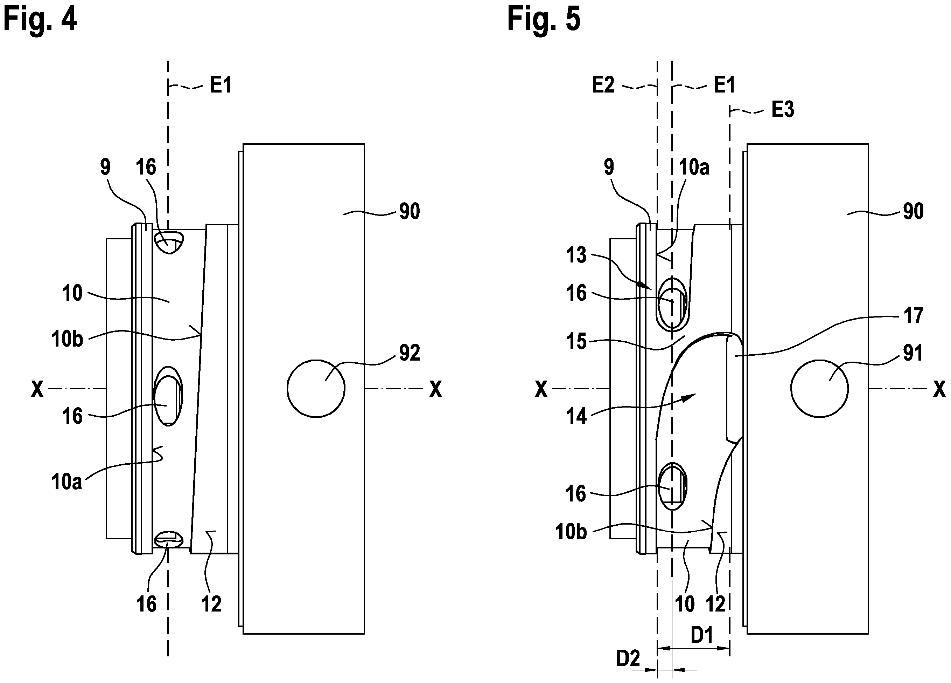

Wie insbesondere auch aus den Fig. 4 und 5 ersichtlich ist, sind dabei die Zufuhröffnungen 16 derart vorgesehen, dass die Mittelpunkte aller Zufuhröffnungen 16 in einer ersten Ebene E1, welche senkrecht zu einer Axialrichtung X-X der Gleitringdichtung ist, angeordnet sind. Dabei sind die Zufuhröffnungen 16 unmittelbar benachbart zu einer ersten Wand 10a des Förderkanals 10 positioniert.

Wie aus Fig. 5 ersichtlich ist, ist die erste Wand 10a derart vorgesehen, dass die erste Wand 10a in einer zweiten Ebene E2, welche ebenfalls senkrecht zu einer Axialrichtung X-X ist, vorgesehen ist. Eine zweite Wand 10b des Förderkanals 10 ist dann derart angeordnet, dass sich der Förderkanal 10 ausgehend vom Startbereich 13 kontinuierlich bis zum Endbereich 14 vergrößert. Weiterhin liegt ein Beginn der Austrittsöffnung 17 in einer dritten Ebene E3, welche senkrecht zur Axialrichtung X-X ist. Dabei ist ein erster Abstand D1 zwischen der zweiten Ebene E2 und der dritten Ebene E3 mindestens doppelt so groß wie ein zweiter Abstand D2 zwischen der zweiten Ebene E2 und der ersten Ebene E1. Somit kann sichergestellt werden, dass ein ausreichender Abstand zwischen den Zufuhröffnungen 16 und der Austrittsöffnung 17 vorhanden ist, was die Leistung der Umwälz-Fördereinrichtung 7 weiter verbessert.

Wie weiter aus Fig. 6 ersichtlich ist, sind die Zufuhröffnungen 16 ferner derart vorgesehen, dass eine Mittellinie M jeder Zufuhröffnung 16 in einem spitzen Winkel α zu einer Radiallinie R, ausgehend von einer Mittelachse der Gleitringdichtung 2 angeordnet ist. Somit sind die Zufuhröffnungen 16 in Rotationsrichtung (Förderrichtung), welche in Fig. 6 durch den Pfeil A angedeutet ist, geneigt, wodurch die Förderleistung in den Förderkanal 10 weiter erhöht wird. Der Winkel α ist dabei bei allen Zufuhröffnungen 16 gleich.

Die Anzahl der Zufuhröffnungen 16 und die Anzahl der Schaufeln 80 des Umwälzrotors 8 sind dabei derart gewählt, dass die Anzahl der Schaufeln kein gerades Vielfaches der Zufuhröffnungen 16 ist. Dadurch können möglicherweise auftretende Schwingungen im Betrieb unterdrückt werden.

Weiter bevorzugt ist eine Summe aller Querschnitte der Zufuhröffnungen gleich einem Querschnitt der Austrittsöffnung 17.

Durch das Vorsehen der Umwälz-Fördereinrichtung 7 kann ferner auf ein separates Sperrfluidsystem mit einem zusätzlichen Fluid verzichtet werden und trotzdem eine Kühlung der Gleitringdichtung 2 erreicht werden. Hierdurch können einerseits Investitionskosten für die Anlage reduziert werden und andererseits werden auch Betriebskosten deutlich gesenkt, da im Umwälzkreislauf keine zusätzliche separate Umwälzpumpe betrieben werden muss. Die Umwälzung des Fluids zur Kühlung wird ausschließlich mittels der Umwälz-Fördereinrichtung 7 der Erfindung ausgeführt.

Wie aus Fig. 1 ersichtlich ist, ist die Umwälz-Fördereinrichtung 7 in Axialrichtung X-X zwischen der Pumpe 31 und der Gleitringdichtung 2 angeordnet. Dabei ist die Gleitringdichtungsanordnung 1 und insbesondere die Umwälz-Fördereinrichtung 7 innerhalb des Pumpengehäuses 33 angeordnet. Die erfindungsgemäße Ausgestaltung der Umwälz-Fördereinrichtung 7 macht es dabei möglich, dass diese extrem flach bauend ist, so dass beispielsweise auch eine Nachrüstung mit einer erfindungsgemäßen Gleitringdichtungsanordnung 1 bei schon bestehenden Pumpen möglich ist, ohne dass dabei Anpassungen an der Pumpe vorgenommen werden müssen. Ein weiterer Vorteil der Erfindung liegt darin, dass eine Baulänge in Axialrichtung X-X der Gleitringdichtungsanordnung 1 relativ kurz gehalten werden kann, da der Teilbereich der Umwälz-Fördereinrichtung 7 und ein Teil der Gleitringdichtung 2 innerhalb des Pumpengehäuses 33 angeordnet werden kann. Somit erfüllt die Gleitringdichtungsanordnung 1 auch die notwendigen Anforderungen an den radialen Bauraum, welcher von Pumpenanbietern häufig möglichst klein gehalten werden soll.

Ferner muss ein Pumpenhersteller ein Pumpengehäuse 31 für die erfindungsgemäße Kühlung nicht ändern, da ein Eintritt und ein Austritt erfindungsgemäß in die Gleitringdichtungsanordnung 1 integriert ist.

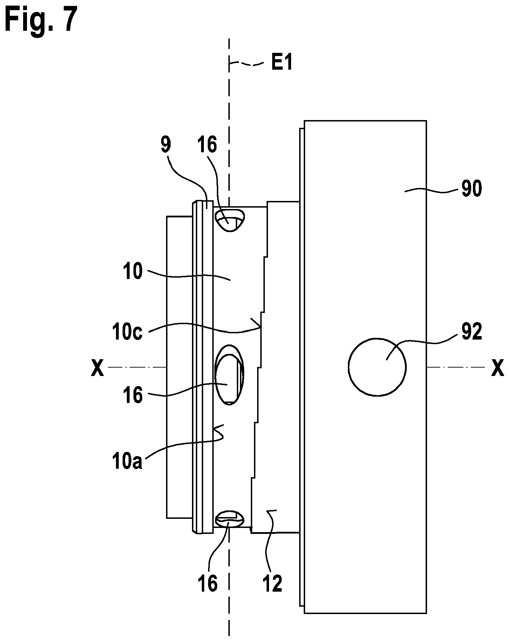

Nachfolgend wird unter Bezugnahme auf Fig. 7 eine Gleitringdichtungsanordnung 1 gemäß einem zweiten bevorzugten Ausführungsbeispiel der Erfindung im Detail beschrieben. Das zweite Ausführungsbeispiel entspricht im Wesentlichen dem ersten Ausführungsbeispiel, wobei technisch gleiche Bauteile mit den gleichen Bezugszeichen bezeichnet sind.

Wie aus Fig. 7 ersichtlich ist, ist die geometrische Form des Förderkanals 10 beim zweiten Ausführungsbeispiel unterschiedlich zum ersten Ausführungsbeispiel ausgebildet. Statt einer kontinuierlichen Erweiterung des Förderkanals erfolgt die Erweiterung des Förderkanals 10 ausgehend vom Startbereich 13 zum Endbereich 14 stufenförmig. Hierbei ist eine zweite, sich stufenförmig erweiternde Wand 10c vorgesehen. Die Länge der Stufen in Umfangsrichtung ist dabei jeweils gleich. Durch die stufenförmig ausgebildete zweite Wand 10c kann somit ein Druckanstieg im Kanal 10 im Betrieb sehr exakt definiert werden.

Ansonsten entspricht das zweite Ausführungsbeispiel dem ersten Ausführungsbeispiel, so dass auf die dort gegebene Beschreibung verwiesen werden kann.

### Bezugszeichenliste

- 1: Gleitringdichtungsanordnung
- 2: Gleitringdichtung
- 3: Rotierender Gleitring
- 3a: Dichtfläche des rotierenden Gleitrings
- 4: Stationärer Gleitring
- 4a: Dichtfläche des stationären Gleitrings
- 5: Dichtspalt
- 6: Raum an der Gleitringdichtung
- 7: Umwälz-Fördereinrichtung
- 8: Umwälzrotor
- 9: Hohlzylindrisches Gehäuse
- 10: Förderkanal
- 10a: Erste Wand
- 10b: Zweite Wand
- 10c: zweite, stufenförmig erweiternde Wand
- 11: Innere Mantelfläche
- 12: Äußere Mantelfläche
- 13: Startbereich
- 14: Endbereich
- 15: Trennsteg
- 16: Zuführöffnungen
- 17: Austrittsöffnung
- 18: Austrittskanal
- 19: Umwälzleitung
- 20: Kühleinrichtung
- 21: Antriebswelle
- 22: Hülse
- 30: Pumpenanordnung
- 31: Pumpe
- 32: Pumpenrotor
- 33: Pumpengehäuse
- 34: Fluidraum
- 35: Spalt
- 36: Atmosphäre
- 37: Aufnahmeraum
- 80: Schaufeln
- 90: Zweiter Gehäuseteil
- 91: Erster Anschluss
- 92: Zweiter Anschluss
- 93: Erste Verbindungsöffnung
- 94: Zweite Verbindungsöffnung
- 95: Weiterer Verbindungskanal
- A: Rotationsrichtung
- D1: erster Abstand
- D2: zweiter Abstand
- E1: erste Ebene
- E2: zweite Ebene
- E3: dritte Ebene
- M: Mittelachse der Zufuhröffnung
- R: Radiallinie
- X-X: Axialrichtung
- α: spitzer Winkel

## Patentansprüche

1. Gleitringdichtungsanordnung zur Abdichtung an einem rotierenden Bauteil (21), umfassend
• eine Gleitringdichtung (2) mit einem rotierenden Gleitring (3) und einem stationären Gleitring (4), welche zwischen ihren Gleitflächen (3a, 4a) einen Dichtspalt (5) definieren,
• eine Umwälz-Fördereinrichtung (7), welche benachbart zum rotierenden Gleitring (3) angeordnet ist,
• wobei die Umwälz-Fördereinrichtung (7) eine Umwälzleitung (19), in welcher eine Kühleinrichtung (20) zur Abkühlung des umgewälzten Fluids angeordnet ist, einen Umwälzrotor (8) und ein hohlzylindrisches Gehäuse (9) umfasst,
• wobei die Umwälzleitung (19) zu einem Raum (6) im Bereich des Dichtspalts (5) der Gleitringdichtung (2) führt, wobei das hohlzylindrische Gehäuse (9) eine innere Mantelfläche (11) und eine äußere Mantelfläche (12) aufweist und wobei an der äußeren Mantelfläche (12) ein Förderkanal (10) vorgesehen ist, welcher von einem Startbereich (13) zu einem Endbereich (14) entlang der äußeren Mantelfläche (12) ausgebildet ist,
• **dadurch gekennzeichnet, dass** der Startbereich (13) des Förderkanals (10) vom Endbereich (14) durch einen Trennsteg (15) getrennt ist,
• wobei eine Vielzahl von Zufuhröffnungen (16) im hohlzylindrischen Gehäuse (9) vorgesehen ist, welche von der inneren Mantelfläche (11) aus im Förderkanal (10) münden, und
• wobei eine einzige Austrittsöffnung (17) am Endbereich (14) vorgesehen ist.

2. Gleitringdichtungsanordnung nach Anspruch 1, wobei die Austrittsöffnung (17) in Axialrichtung (X-X) der Gleitringdichtungsanordnung gerichtet ist.

3. Gleitringdichtungsanordnung nach einem der vorhergehenden Ansprüche, wobei eine Breite des Förderkanals (10) vom Startbereich (13) zum Endbereich (14) erweitert ist.

4. Gleitringdichtungsanordnung nach Anspruch 3, wobei sich der Förderkanal (10) ausgehend vom Startbereich bis zum Endbereich kontinuierlich erweitert oder sich stufenweise erweitert.

5. Gleitringdichtungsanordnung nach einem der vorhergehenden Ansprüche, wobei Mittelachsen (M) der Zufuhröffnungen (16) zu Radiallinien (R) in einem Winkel α geneigt sind.

6. Gleitringdichtungsanordnung nach einem der vorhergehenden Ansprüche, wobei der Umwälzrotor (8) eine Vielzahl von Schaufeln (80) aufweist.

7. Gleitringdichtungsanordnung nach Anspruch 6, wobei die Anzahl der Schaufeln (80) kein gerades Vielfaches der Anzahl der Zufuhröffnungen (16) ist.

8. Gleitringdichtungsanordnung nach einem der vorhergehenden Ansprüche, wobei alle Mittelpunkte der Zufuhröffnungen (16) in einer ersten Ebene (E1) liegen, welche senkrecht zur Axialrichtung (X-X) ist.

9. Gleitringdichtungsanordnung nach einem der vorhergehenden Ansprüche, wobei der Förderkanal (10) eine erste Wand (10a) aufweist, welche in einer zweiten Ebene (E2) liegt, welche senkrecht zur Axialrichtung (X-X) ist.

10. Gleitringdichtungsanordnung nach Anspruch 9, wobei ein Beginn der Austrittsöffnung (17) in einer dritten Ebene (E3) liegt, welche senkrecht zur Axialrichtung (X-X) ist, und wobei ein erster Abstand (D1) zwischen der zweiten und dritten Ebene mindestens doppelt so groß ist wie ein zweiter Abstand (D2) zwischen der zweiten und ersten Ebene.

11. Pumpenanordnung umfassend eine Pumpe (31) mit einem Pumpenrotor (32) und einer Gleitringdichtungsanordnung (1) nach einem der vorhergehenden Ansprüche.

12. Pumpenanordnung nach Anspruch 11, wobei die Gleitringdichtungsanordnung (1) radial innerhalb eines Pumpengehäuses (33) angeordnet ist.

## Claims

1. A mechanical seal arrangement for sealing on a rotating component (21), comprising
• a mechanical seal (2) having a rotating slide ring (3) and a stationary slide ring (4), which define a sealing gap (5) between the sliding surfaces (3a, 4a) thereof
• a recirculation conveyor (7) arranged adjacent to the rotating slide ring (3),
• wherein the recirculation conveyor (7) comprises a recirculation line (19) in which a cooling device (20) for cooling the recirculated fluid is arranged, a recirculation rotor (8) and a hollow cylindrical housing (9),
• wherein the recirculation line (19) leads to a cavity (6) in the region of the sealing gap (5) of the mechanical seal (2), wherein the hollow cylindrical housing (9) comprises an inner shell surface (11) and an outer shell surface (12), and wherein a conveyor channel (10) is provided on the outer shell surface (12), which conveyor channel (10) is formed along the outer shell surface (12) from a start portion (13) to an end portion (14),
• **characterized in that**
• the start portion (13) of the conveyor channel (10) is separated from the end portion (14) by a separating web (15),
• wherein a plurality of feed openings (16) are provided in the hollow cylindrical housing (9), which open from the inner shell surface (11) into the conveyor channel (10), and
• wherein a single outlet opening (17) is provided at the end portion (14).

2. The mechanical seal arrangement according to claim 1, wherein the outlet opening (17) is directed in the axial direction (X-X) of the mechanical seal arrangement.

3. The mechanical seal arrangement according to one of the preceding claims, wherein a width of the conveyor channel (10) is widened from the start portion (13) to the end portion (14).

4. The mechanical seal arrangement according to claim 3, wherein the conveyor channel (10) widens continuously or widens stepwise starting from the start portion to the end portion.

5. The mechanical seal arrangement according to one of the preceding claims, wherein center axes (M) of the feed openings (16) are inclined towards radial lines (R) at an angle α.

6. The mechanical seal arrangement according to one of the preceding claims, wherein the recirculation rotor (8) comprises a plurality of blades (80).

7. The mechanical seal arrangement according to claim 6, wherein the number of blades (80) is not an even multiple of the number of feed openings (16).

8. The mechanical seal arrangement according to one of the preceding claims, wherein all centers of the feed openings (16) are located in a first plane (E1) which is perpendicular to the axial direction (X-X).

9. The mechanical seal arrangement according to one of the preceding claims, wherein the conveyor channel (10) comprises a first wall (10a) located in a second plane (E2) which is perpendicular to the axial direction (X-X).

10. The mechanical seal arrangement according to claim 9, wherein a start of the discharge opening (17) is located in a third plane (E3) which is perpendicular to the axial direction (X-X), and wherein a first distance (D1) between the second and third planes is at least twice as large as a second distance (D2) between the second and first planes.

11. A pump arrangement comprising a pump (31) having a pump rotor (32) and a mechanical seal arrangement (1) according to one of the preceding claims.

12. The pump arrangement according to claim 11, wherein the mechanical seal arrangement (1) is arranged radially inside a pump housing (33).

## Revendications

1. Ensemble à garniture mécanique d'étanchéité destiné à étanchéifier sur un composant rotatif (21), comprenant :
- une garniture mécanique d'étanchéité (2) avec un anneau de glissement rotatif (3) et un anneau de glissement stationnaire (4), lesquels définissent entre leurs surfaces de glissement (3a, 4a) une fente d'étanchéité (5),
- un dispositif de convoyage de recirculation (7), lequel est disposé de manière adjacente à l'anneau de glissement rotatif (3),
- dans lequel le dispositif de convoyage de recirculation (7) comprend un conduit de recirculation (19), dans lequel un dispositif de refroidissement (20) destiné à refroidir le fluide en circulation est disposé, un rotor de recirculation (8) et un boîtier cylindrique creux (9),
- dans lequel le conduit de recirculation (19) mène à un espace (6) dans la zone de la fente d'étanchéité (5) de la garniture mécanique d'étanchéité (2), dans lequel le boîtier cylindrique creux (9) présente une surface enveloppante intérieure (11) et une surface enveloppante extérieure (12) et dans lequel est prévu sur la surface enveloppante extérieure (12) un canal de convoyage (10), lequel est réalisé depuis une zone de départ (13) vers une zone finale (14) le long de la surface enveloppante extérieure (12),
- **caractérisé en ce que**
la zone de départ (13) du canal de convoyage (10) est séparée de la zone finale (14) par une nervure de séparation (15),
- dans lequel une pluralité d'ouvertures d'amenée (16) est prévue dans le boîtier cylindrique creux (9), lesquelles débouchent depuis la surface enveloppante intérieure (11) dans le canal de convoyage (10), et
- dans lequel une unique ouverture de sortie (17) est prévue sur la zone finale (14).

2. Ensemble à garniture mécanique d'étanchéité selon la revendication 1, dans lequel l'ouverture de sortie (17) est dirigée dans la direction axiale (X-X) de l'ensemble à garniture mécanique d'étanchéité.

3. Ensemble à garniture mécanique d'étanchéité selon l'une quelconque des revendications précédentes, dans lequel une largeur du canal de convoyage (10) s'élargit depuis la zone de départ (13) vers la zone finale (14).

4. Ensemble à garniture mécanique d'étanchéité selon la revendication 3, dans lequel le canal de convoyage (10) s'élargit en partant de la zone de départ vers la zone finale ou s'élargit progressivement.

5. Ensemble à garniture mécanique d'étanchéité selon l'une quelconque des revendications précédentes, dans lequel des axes centraux (M) des ouvertures d'amenée (16) sont inclinés par rapport à des lignes radiales (R) selon un angle α.

6. Ensemble à garniture mécanique d'étanchéité selon l'une quelconque des revendications précédentes, dans lequel le rotor de recirculation (8) présente une pluralité d'aubes (80).

7. Ensemble à garniture mécanique d'étanchéité selon la revendication 6, dans lequel le nombre des aubes (80) n'est pas un multiple entier du nombre des ouvertures d'amenée (16).

8. Ensemble à garniture mécanique d'étanchéité selon l'une quelconque des revendications précédentes, dans lequel tous les points centraux des ouvertures d'amenée (16) se situent dans un premier plan (E1), lequel est perpendiculaire à la direction axiale (X-X).

9. Ensemble à garniture mécanique d'étanchéité selon l'une quelconque des revendications précédentes, dans lequel le canal de convoyage (10) présente une première paroi (10a), laquelle se situe dans un deuxième plan (E2), lequel est perpendiculaire à la direction axiale (X-X).

10. Ensemble à garniture mécanique d'étanchéité selon la revendication 9, dans lequel un début de l'ouverture de sortie (17) se situe dans un troisième plan (E3), lequel est perpendiculaire à la direction axiale (X-X), et dans lequel une première distance (D1) entre le deuxième et le troisième plan est au moins deux fois plus grande qu'une deuxième distance (D2) entre le deuxième et le premier plan.

11. Ensemble de pompage comprenant une pompe (31) avec un rotor de pompe (32) et un ensemble à garniture mécanique d'étanchéité (1) selon l'une quelconque des revendications précédentes.

12. Ensemble de pompage selon la revendication 11, dans lequel l'ensemble à garniture mécanique d'étanchéité (1) est disposé de manière radiale à l'intérieur du boîtier de pompe (33).
